# EUROPEAN PATENT APPLICATION

(11) **EP 3 556 232 A1**
(43) Date of publication of application: **23.10.2019**
(21) Application number: 18178113.9
(22) Date of filing: 15.06.2018
(51) Int. Cl.: A24F 47/00, C09D 5/33

(54) **AN ELECTRONIC HEATING DEVICE**

(30) Priority: 16.04.2018 CN 201810339639
(71) Applicant: Shenzhen Hangsen Star Technology Co., Ltd., Shenzhen, Guangdong 518112 (CN)
(72) Inventor: YAO, Haofeng, Shenzhen, Guangdong 518112 (CN); SONG, Laizhi, Shenzhen, Guangdong 518112 (CN); ZHANG, Shipeng, Shenzhen, Guangdong 518112 (CN)
(74) Representative: Poskett, Oliver James

(57) **Abstract**

The invention relates to an electronic heating device for a bake-type electronic cigarette, which includes a nozzle 100, a shell 200 provided with a receiving chamber 201 and an air inlet hole 203, a heating assembly 300 and a power assembly 400. The heating assembly includes a heating tube 310 and a thermal insulation tube 320. The heating tube is provided with a baking chamber 301. The wall of the thermal insulation tube is coated with a thermal insulation coating 321. The thermal insulation tube is sheathed outside the heating tube, and a gap passage 303 is formed between the thermal insulation tube and the heating tube, and the insulating tube is provided with an air-conducting hole (305) that communicates with the receiving chamber 201 and the gap passage 303. Outside cold air enters the receiving chamber through the air inlet hole and the gap, and enters the gap passage through the air-conducting hole (305).

## Description

### Technical Field

The invention relates to the technical field of electronic cigarettes, especially to an electronic heating device.

### Background Art

Modern humans have realized the harm of cigarettes to human health and the pollution of cigarette smoke to the atmospheric environment, especially the indoor environment. With the improvement of the quality of life, people gradually increase their attention to their own health and the importance of the external environment, especially the indoor environmental pollution. Quitting smoking is imperative. In order to solve the excessive dependency of "addicts" on traditional cigarettes, electronic cigarettes have emerged in recent years.

Electronic cigarettes are generally classified into smoke-oil type and bake type (that is the heating no-burning type), and smoke-oil type electronic cigarettes generally generate fog by atomizing liquid smoked oil for users to smoke. Bake type electronic cigarettes generally are heated to bake no-burning solid tobacco leaves and produce cigarette gas for users to smoke. For the heating no-burning electronic cigarettes, the shell is prone to become hot because of the relatively large amount of heat generated during the baking process. Conventional bake type electronic cigarettes generally protect against heat transfer, such as by using PEEK (polyether etherketone) or other plastics to cover the baking cups for heat insulation, or use wrapped cotton wool insulation. However, PEEK materials and fiber cotton are expensive and their heat resistance is not ideal. After prolonged use, the heat will still be conducted, and plastic melting problems often occur during use.

### Summary of the Invention

The invention relates to an electronic heating device, which includes a nozzle, a shell, a heating assembly and a power assembly. The heating assembly includes a heating tube and a thermal insulation tube. The heating tube is provided with a baking chamber. The wall of the thermal insulation tube is coated with a thermal insulation coating. The thermal insulation tube is sheathed outside the heating tube, and a gas passage is formed between the thermal insulation tube and the heating tube, and the insulating tube is provided with an air-conducting hole that communicates with a receiving chamber and a gap passage. The thermal radiation of the heating tube is reflected by the thermal insulation coating, which prevents the heat in the baking chamber from being conducted directly to the shell. A gap is provided between the thermal insulation tube and the heating tube, outside cold air can also enter the receiving chamber from the air inlet hole and the gap, and enter the clearance channel from the air-conducting hole, and reduce the temperature of the heating tube and the thermal insulation tube during the smoking process. This kind of structure is designed to reduce temperature by applying thermal insulation coating and airflow dredging. The entire electronic heating device has a simple structure and a good heat insulation effect.

The purpose of the invention is to provide an electronic heating device with good thermal insulation effect.

An electronic heating device includes:
a shell internally provided with a receiving chamber, the shell having an air inlet hole communicating with the receiving chamber;
a heating assembly disposed in the receiving chamber, the heating assembly having a heating tube and a thermal insulation tube; wherein,
   the heating tube is internally provided with a baking chamber adapted for placing a tobacco product to be baked;
   the thermal insulation tube is coated with a thermal insulation coating, and the thermal insulation tube is provided outside the heating tube;
   the thermal insulation tube and the heating tube are mutually spaced to form a gap passage; and
   the thermal insulation tube is provided with an air-conducting hole communicating with the receiving chamber and the gap passage;
a nozzle is disposed on the upper end of the shell such as air can flow through the nozzle, the baking cavity and the gap passage; and
a power assembly disposed in the receiving chamber and adapted for powering to the heating tube.

In one embodiment, the thermal insulation coating comprises aluminum dihydrogen phosphate, magnesium dihydrogen phosphate and aluminum powder. The mass ratio of the aluminum dihydrogen phosphate, the magnesium dihydrogen phosphate and the aluminum powder is 89 to 98.5:0 to 9.8:0.5 to 1.5.

In one embodiment, the thermal insulation coating further includes chromium trioxide, and the quantity of the chromium trioxide accounts for 2% to 4% of the total mass of the thermal insulation coating.

In one embodiment, the thickness of the thermal insulation coating is 0.05mm to 0.2mm.

In one embodiment, the power assembly comprises a battery, a circuit board and multiple sensors.

In one embodiment, the heating tube includes a tube body and multiple heating elements; and the tube body is provided with multiple sensing holes adapted to dispose the sensors, and the number between the sensors and the sensing holes is the same.

In one embodiment, all the heating elements are configure to be electrically connected to the battery independently of each other through the circuit board; and the battery is configure to independently power each heating element through the circuit board.

In one embodiment, the heating elements or sheathed are embedded in the tube wall of the tube body.

In one embodiment, the tube body comprises an open end and a closed end, and all the heating elements are sequentially disposed in the tube body along the direction from the open end to the closed end.

In one embodiment, the receiving chamber is divided into a heating chamber and a power supply chamber by the circuit board, wherein the heating assembly is disposed in the heating chamber, and the battery is disposed in the power supply chamber.

In one embodiment, the thermal insulation tube is suspended in the receiving chamber.

The above electronic heating device includes a nozzle, a shell, a heating assembly, and a power assembly. The heating assembly includes a heating tube and a thermal insulation tube. The sensor of the heating tube is provided with a baking chamber. The wall of the heat insulating tube is coated with a thermal insulation coating, the thermal insulation tube is sheathed outside the heating tube, and the thermal insulation tube and the heating tube are mutually spaced to form a gap passage, and the thermal insulation tube is provided with an air-conducting hole that communicates the receiving chamber and the gap passage. In use, the tobacco product to be baked is placed in a baking chamber, and the heating tube is powered by the power assembly so that the heating tube generates heat, so that the tobacco product in the baking chamber generates cigarette gas for the user to smoke. The thermal insulation coating is applied to the wall of the insulating tube, and the thermal radiation of the heating tube is reflected by the thermal insulation coating to prevent the heat in the baking chamber from being directly transferred to the shell. In addition, a gap is provided between the thermal insulation tube and the heating tube. When sucking, external cold air enters the receiving chamber from the inlet hole and enters the gap passage from the air-conducting hole, thereby reducing the temperature of the heating tube and the insulating tube during the smoking process. This design changes the traditional way of isolating heat transfer protection. Instead, it uses a thermal insulation coating and airflow dredging to cool the design. The entire electronic heating device has a simple structure and a good heat insulation effect. It can be used for a long time. Heating pipe heating also does not have the problem of melting the insulation pipe.

### Description of Drawings

FIG.1 is the shape configuration diagram of the electronic heating device.
FIG.2 is the sectional view of A-A plane for electronic heating device in fig.1;
FIG.3 is the shape configuration diagram of the heating assembly of the electronic heating device in fig.1;
FIG.4 is the use the state diagram of the electronic heating device inserted into a cigarette in fig.1;
FIG.5 is the shape configuration diagram of the heating pipe of the electronic heating device in fig.1;
FIG.6 is the sectional view of heating pipe in fig.1;
FIG.7 is the shape configuration diagram of the power assembly of the electronic heating device in fig.1.

### Detailed Description of the Invention

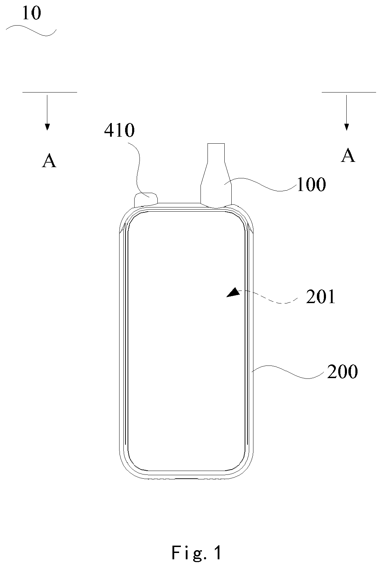

As shown in Fig.1 to Fig.2, an embodiment of an electronic heating device 10 comprises a nozzle 100, a shell 200, a heating assembly 300, and a power assembly 400. The shell 200 is provided with a receiving chamber 201, and the shell 200 has air inlet hole 203 communicating with the receiving chamber 201. The heating assembly 300 is disposed within the receiving chamber 201.

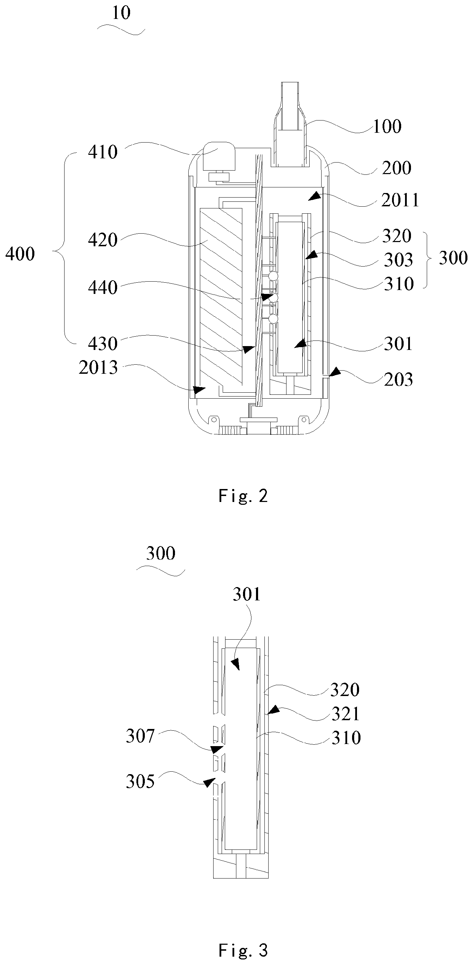

As shown in FIG. 3, there is the structure of the heating assembly 300. The heating assembly 300 comprises a heating tube 310 and a thermal insulation tube 320. The baking chamber 301 is provided inside the heating pipe 310. The baking chamber 301 adapted for placing the tobacco or tobacco product to be baked. The wall of the thermal insulation tube 320 is coated with a thermal insulation coating 321. The heat insulation tube 320 is provided outside the heating tube 310, and the thermal insulation tube 320 and the heating tube 310 are mutually spaced to form a gap passage 303. The thermal insulation tube 320 is opened with an air-conducting hole 305 communicating with the receiving chamber 201 and the gap passage 303.

The nozzle 100 is disposed on the upper end of the shell 200 such that air can flow through the nozzle 100, the baking chamber 301 and the gap passage 303. The power assembly 400 is used for powering the heating tube 310, and the power assembly 310 is disposed in the receiving chamber 201.

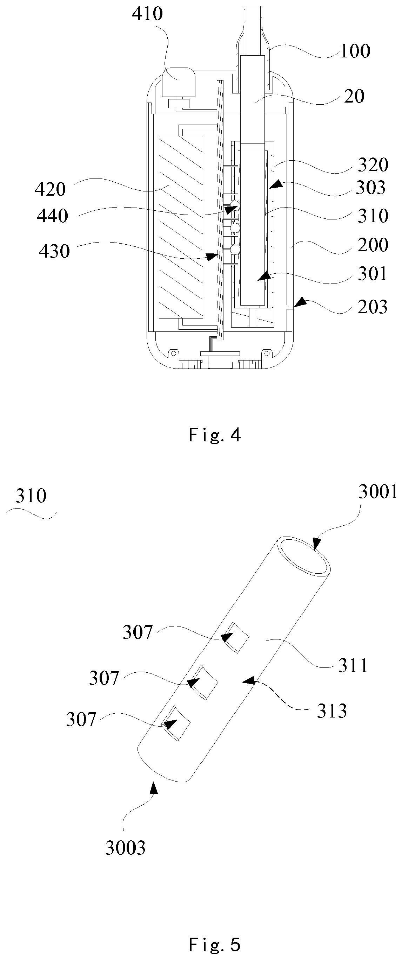

When the electronic heating device 10 is used, as shown in FIG. 4, the tobacco product 20 to be baked is placed in the baking chamber 301, and the heating tube 310 is powered by the power assembly 400 so that the heating tube 310 generates heat, thereby enabling the baking chamber 301 to become hot. The smoke product 20 inside produces cigarette gas which flows from the baking chamber 301 to the nozzle 100 for the user to smoke. When smoking, external cold air enters the receiving chamber 201 from the air inlet hole 203 and enters the gap passage 303 from the air-conducting hole 305. During the smoking process, the temperature of the heating tube 310 and the thermal insulation tube 320 is lowered, and the cooling is performed in the air flow dredging, and there is a good insulation effect. When the air exiting from the gap passage 303 passes through the tobacco product 20, it can also assist in heating the tobacco product 20 and reduce energy consumption.

In this embodiment, the tobacco product 20 is a cigarette. When the cigarette is inserted into the baking chamber 301, the cigarette gas will be generated through heating no-burning the cigarette by the heating tube 310. Compared with the flue gas generated by directly igniting the cigarette 20, the cigarette gas produced by the heating no-burning cigarette 20 can effectively reduce carcinogens such as tar and reduce the health hazard to the user.

In other embodiments, the tobacco product 20 may also be tobacco leaf, tobacco, solid smoke oil, and the like.

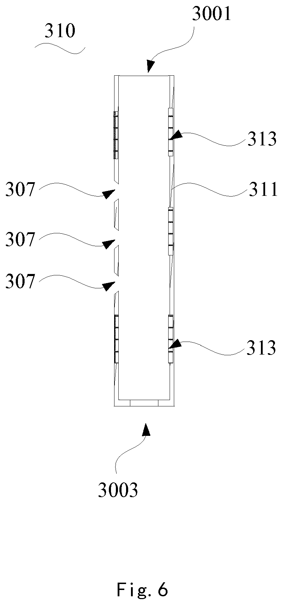

As shown in Fig.5 and Fig.6, in this embodiment, the heating pipe 310 comprises a tube body 311 and multiple heating elements 313. The tube body 311 is provided with multiple sensing holes 307.

Specifically, the heating elements 313 are embedded or sheathed in the tube wall of the tube body 311. In this embodiment, the heating elements 313 are heating wires, and the heating wires are sheathed around the outside of the tube body 311. In other embodiments, the heating elements 313 may also be sheet-shaped.

Specifically, the tube body 311 has an open end 3001 and a closed end 3003, and all heating elements 313 are sequentially disposed in the tube body 311 along the direction from the open end 3001 to the closed end 3003. Correspondingly, the sensing holes 307 are also sequentially disposed in the direction from the open end 3001 to the closed end 3003 of the tube body 311.

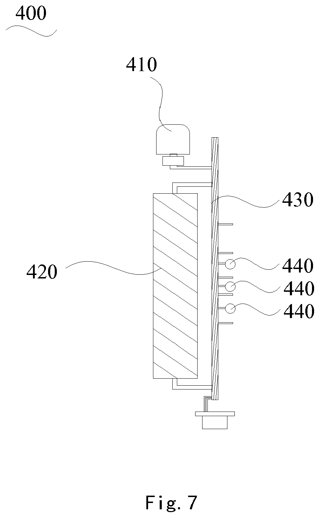

As shown in Fig.7, in this embodiment, the power assembly 400 comprises a switch 410, a battery 420, a circuit board 430, and multiple sensors 440. The switch 410 is used to control the turning on or off of the circuit, and the battery 420 may be a rechargeable battery, etc. Each sensor 440 is disposed in a sensing hole 307, and the number of the sensors 440 and the sensing holes 307 is the same.

As shown in Fig.2 and Fig.4, Specifically, the heating elements 313 are configured to be electrically connected to the battery 420 independently of each other through the circuit board 430; and the battery 420 is configured to independently power each heating element 313 through the circuit board 430.

Specifically, each sensor 440 is independently installed in a sensing hole 307. Each sensor 440 can sense whether there is the tobacco product 20 to be baked in the baking chamber 301 through the respective sensing hole 307. If the baked tobacco product 20 is disposed the baking chamber 301, whose corresponding sensor 440 sends a signal to the circuit board 430, and the circuit board 430 controls the battery 420 to supply power for the corresponding heating element 313 placed to the baking chamber 301. If not, the battery 420 does not supply power to the corresponding heating element 313.

In this embodiment, the number of sensors 440 is three, and the number of corresponding sensing holes 307 is also three. The sensing holes 307 are sequentially disposed in the direction from the open end 3001 to the closed end 3003 of the pipe body 311. The sensor 440 can detect whether the tobacco product 20 is present in the high, medium, or low positions in the baking chamber 301. For example, when the tobacco product 20 is long, the sensor 440 in three positions detect the tobacco product 20, and then the battery 420 is controlled by the circuit board 430 to supply power to all the heating elements 313. When the tobacco product 20 is short, only the sensor 440 near the bottom of the baking chamber 301 detects the smoking product 20, the circuit board 430 controls the battery 420 to supply power to the heating element 313 at the bottom, and the remaining several heating elements 313 are disconnected.

Each sensor hole 307 is provided with a sensor 440 and corresponds to a heating element 313. In this way, each sensor 440 controls whether the corresponding heating element 313 initiates the heating process according to whether the tobacco product 20 is inside the heating tube 310.

In addition, multiple heating elements 313 may also perform a heating operation of the next heating element 313 every 3 to 5 minutes in order from the bottom to the top according to a preset control program under the coordination of the corresponding sensors 440 until all the heating elements 313 are started up and the tobacco product 20 is completely baked until no cigarette gas is produced. This sequential baking method for the tobacco product 20 is similar to the igniting of the tobacco product 20 from the bottom to the top, which improves the taste of the cigarette gas of the tobacco product 20.

Of course, in other embodiments, the number of sensors 440 may also be two, four, five, six, and the like.

The sensor 440 senses whether there is a tobacco product 20 in the corresponding position, and if so, the heating element 313 in the corresponding position is activated to prevent heating the air, effectively saving energy and avoiding overheating caused by empty heating.

Specifically, please refer to FIG. 2 again. After the assembly of electronic heating device is completed, the sensing holes 307 provided on the tube body 311 are matched with the air-conducting holes 305 provided on the thermal insulating tube 320. Part of the sensors 440 are placed in the corresponding sensing holes 307, and part of the sensors 440 are placed in the air-conducting holes 305, and the air can flow between the air-conducting holes 305 and the gap passage 303 through a gap formed between the sensors 440 and the air-conducting holes 307. The sensors 440 are positioned bidirectional through the sensing holes 307 and the air-conducting holes 305. The structure of the electronic heating device 10 is ingeniously designed, making full use of the limited space of the electronic heating device 10.

Specifically, as shown in FIG. 2, The receiving chamber 201 provided in the shell 200 is divided into a heating chamber 2011 and a power supply chamber 2013 by the circuit board 430, and the heating assembly 300 is disposed in the heating chamber 2011. The battery 420 is disposed in the power supply chamber 2013. By the separation setting, the heat in the heating chamber 2011 is less transmitted into the power supply chamber 2013, which prevents the battery 420 from overheating, causing explosion and the like.

In this embodiment, the thermal insulation tube 320 is suspended in the receiving chamber 201, and is specifically suspended in the heating chamber 2011. The thermal insulation tube 320 is suspended and is not in direct contact with the shell 200, so as to prevent heat conduction to the shell 200 in a thermally conductive manner. In addition, an air flow space existed between the thermal insulation tube 320 and the shell 200 can effectively reduce the temperature of the shell 200.

Specifically, the thermal insulation coating 321 is coated on the tube wall of the thermal insulation tube 320, and the thermal radiation of the heating tube 320 is reflected by the thermal insulation coating 321, so as to reduce the temperature of the shell 200.

In the present embodiment, the thermal insulation coating 321 is coated on the outer wall of the thermal insulation tube 320. This coating method is simple and easy to apply.

Of course, in other embodiments, the thermal insulation coating 321 may also be coated on the inner wall of the thermal insulation tube 320.

Specifically, the material of the thermal insulation tube 320 is ceramic, glass or metal.

Specifically, the thermal insulation coating 321 include aluminum dihydrogen phosphate, magnesium dihydrogen phosphate, and aluminum powder. The mass ratio of aluminum dihydrogen phosphate, magnesium dihydrogen phosphate, and aluminum powder is 89 to 98.5:0 to 9.8:0.5 to 1.5.where in aluminum dihydrogen phosphate is , that is Al(H₂PO₄)₃, magnesium dihydrogen phosphate is MgH₂PO₄.

Further, the mass ratio of aluminum dihydrogen phosphate, magnesium dihydrogen phosphate, and aluminum powder is 89 to 98.5: 3.5 to 9.5: 0.5 to 1.5.

Aluminum dihydrogen phosphate is the base material. Magnesium dihydrogen phosphate can act as a curing agent. Aluminum powder is a reactive pigment and plays a role in heat insulation and anti-radiation. The thermal insulation coating 321 includes phosphate and aluminum powders, which are inorganic single components without any odor. The temperature resistance range is from -80°C to 1800°C, and the thermal conductivity can be less than 0.03W/m.K. Inhibiting and shielding infrared radiant heat and heat conduction, heat insulation suppression efficiency of up to 90%. The thermal insulation coating 321 can inhibit the heat radiation and heat loss of high temperature objects. The raw material of the thermal insulation coating 321 can be coated and adhered to the surface of the thermal insulation tube 320, dried at a low temperature or naturally dried at room temperature, the thermal insulation coating 321 and the thermal insulation tube 320 have very good adhesion. The thermal insulation coating 321 does not crack after high temperature calcinations, and can withstand high temperatures up to 1800°C. The thermal insulation coating 321 has good high temperature resistance, and there is no plastic melting problem in the thermal insulation coating 321.

Specifically, aluminum dihydrogen phosphate is generated by the reaction of phosphoric acid (H₃PO₃) and Al(OH)₃, and magnesium dihydrogen phosphate is generated by the reaction of phosphoric acid and MgO. Phosphate and aluminum powder are cheaper and save money.

Specifically, the aluminum powder has a particle size of 10 nm to 20 nm.

In one embodiment, the thermal barrier coating 321 also includes chromium trioxide (CrO₃) in the raw material. CrO₃ accounts for 2% to 4% of the total mass of the thermal insulation coating 321. CrO₃ has a certain color, and the color of the thermal insulation coating 321 is diversified.

Specifically, the thickness of the thermal insulation coating 321 can be set 0.05 mm to 0.2 mm. For example, the thickness is 0.1 mm. Since the above structure of the electronic heating device 10 is designed to change the conventional way of protecting against heat transfer, and it is designed to reduce the temperature by applying a thermal insulation coating and airflow dredging, so that the thermal insulation coating 321 is thinner. Under these conditions, a good heat insulation effect can be achieved, and the structure of the entire electronic heating device 10 is simple.

In the above-described electronic heating device 10, the thermal insulation coating 321 is coated on the wall of the thermal insulation tube 320, and the thermal radiation of the heating tube 310 is reflected by the thermal insulation coating 320, and the temperature of the enclosure 200 is reduced. In addition, a gap is provided between the thermal insulation tube 320 and the heating tube 310, and there is no problem of melting the thermal insulation tube 320 even if the heating tube is heated for a long time. At the same time, the outside cold air can also enter the receiving chamber 201 from the air inlet hole 203 and enter the gap passage 303 from the air-conducting hole 305, and reduce the temperatures of the heating tube 310 and the thermal insulation tube 320 during the smoking process. This design changes the traditional way of isolating the heat transfer protection. Instead, it uses a thermal insulation coating 321 and air flow dredging to reduce temperature of the shell200. The entire electronic heating device 10 has a simple structure and a good heat insulation effect.

The following are specific embodiments

### Embodiment 1

Phosphoric acid and Al (OH)₃ react to produce aluminum dihydrogen phosphate solution, phosphoric acid reacts with MgO to produce magnesium dihydrogen phosphate solution, and aluminum dihydrogen phosphate solution and magnesium dihydrogen phosphate solution are mixed in a certain ratio to form a mixture solution, and distilled water is added. It was diluted so that the concentration of aluminum dihydrogen phosphate in the solution was 89 g/L, and the concentration of magnesium dihydrogen phosphate was 9.5 g/L. A certain amount of CrO₃ was added to the mixture so that the CrO3 concentration was 2.5 g/L. In a ball mill, a certain amount of reactive pigment aluminum powder is reacted to obtain an orange suspension which is the base material of the paint. A certain amount of aluminum powder was added to the base material of the coating so that the aluminum powder concentration was 1.2 g/L. With high-speed stirring and dispersing for about half an hour, a phosphate aluminum powder coating was prepared. Before use, water as a diluent, adjusted to a viscosity of 65cp, coated on the wall of the aluminum tube, forming a thermal insulation tube.

According to the structure shown in FIG. 2, the above-prepared insulated pipe is assembled with a heating pipe, a shell, a nozzle, a switch, a battery core, a circuit board, an inductor, etc. to form an electronic heating device.

### Embodiment 2

Phosphoric acid and Al(OH)₃ were reacted to produce aluminum dihydrogen phosphate solution, and the aluminum dihydrogen phosphate solution was diluted with distilled water so that the concentration of aluminum dihydrogen phosphate in the solution was 98.5 g/L. A certain amount of CrO₃ was added to make the concentration of CrO₃ 3 g/L. In a ball mill, a certain amount of reactive pigment aluminum powder is reacted to obtain an orange suspension which is the base material of the paint. A certain amount of aluminum powder was added to the base material of the paint so that the aluminum powder concentration was 1.5 g/L. With high-speed stirring and dispersing for about half an hour, a phosphate aluminum powder coating was prepared. Before use, water was used as a diluents, the viscosity was adjusted to 25 cp, and the tube was coated on the wall of an aluminum tube to form an insulated tube.

According to the structure shown in FIG. 2, the above-prepared insulated pipe is assembled with a heating pipe, a shell, a nozzle, a switch, a battery core, a circuit board, an inductor, and the like to form an electronic heating device.

### Embodiment 3

### The preparation of thermal insulation coating materials

The phosphoric acid reacts with Al(OH)₃ to produce aluminum dihydrogen phosphate solution, and the phosphoric acid reacts with MgO to produce magnesium dihydrogen phosphate solution. The aluminum dihydrogen phosphate solution and magnesium dihydrogen phosphate solution are mixed in a certain ratio to form a mixed solution, and distilled water is added. It was diluted so that the concentration of aluminum dihydrogen phosphate in the solution was 96 g/L, and the concentration of magnesium dihydrogen phosphate was 3.5 g/L. A certain amount of CrO₃ was added to the mixture so that the concentration of CrO3 was 3.25 g/L. In a ball mill, a certain amount of reactive pigment aluminum powder is reacted to obtain an orange suspension which is the base material of the paint. A certain amount of aluminum powder was added to the base material of the paint so that the aluminum powder concentration was 0.5 g/L. With high-speed stirring and dispersing for about half an hour, a phosphate aluminum powder coating was prepared. Before use, water was used as a diluent, the viscosity was adjusted to 40 cp, and the tube was coated on the wall of an aluminum tube to form an insulated tube.

According to the structure shown in FIG. 2, the above-prepared insulated pipe is assembled with a heating pipe, a shell, a nozzle, a switch, a battery core, a circuit board, an inductor, and the like to form an electronic heating device.

### Control embodiment 1

The aluminum tube was not coated with any paint. According to the structure shown in FIG. 2, an aluminum heating tube, a shell, a nozzle, a switch, a battery core, a circuit board, and an inductor are assembled to form an electronic heating device.

### Control embodiment 2

This electronic heating device is different from the first embodiment in that a thermal insulation pipe is not provided, and polyetheretherketone (PEEK) is coated on a heating pipe.

### Test result

Using the electronic heaters of Examples 1 to 3 and Comparative Examples 1 and 2, the same product cigarettes were not burned and the temperature of the heating device shell was measured after use. The results are shown in Table 1 below.

| | Baking a cigarette | Bake 5 cigarettes |
|---|---|---|
| Embodiments 1 | 260°C | 270°C |
| Embodiments 2 | 275°C | 290°C |
| Embodiments 3 | 270°C | 285°C |
| Control embodiments 1 | 320°C | 360°C |
| Control embodiments 2 | 315°C | 345°C |

It can be seen from the results of Table 1 that the electronic cigarettes of the structures of embodiments 1 to 3 have good thermal insulation effects, and the long-term use temperature is still relatively low.

## Claims

1. An electronic heating device, comprising:
a shell internally provided with a receiving chamber, the shell having an air inlet hole communicating with the receiving chamber;
a heating assembly disposed in the receiving chamber, the heating assembly having a heating tube and a thermal insulation tube, wherein:
the heating tube is internally provided with a baking chamber adapted for placing a tobacco product to be baked;
the thermal insulation tube is coated with a thermal insulation coating, and the thermal insulation tube is provided outside the heating tube;
the thermal insulation tube and the heating tube are mutually spaced to form a gap passage; and
the thermal insulation tube is provided with an air-conducting hole communicating with the receiving chamber and the gap passage;
a nozzle disposed on the end of the shell, and the air can flow through the nozzle, the baking chamber and the gap passage; and
a power assembly disposed in the receiving chamber and adapted for powering the heating tube.

2. The electronic heating device of claim 1, wherein the thermal insulation coating comprises aluminum dihydrogen phosphate, magnesium dihydrogen phosphate and aluminum powder; and
the mass ratio of the aluminum dihydrogen phosphate, the magnesium dihydrogen phosphate and the aluminum powder is 89 to 98.5:0 to 9.8:0.5 to 1.5.

3. The electronic heating device of claim 2, wherein the thermal insulation coating further includes chromium trioxide, and the quantity of the chromium trioxide accounts for 2% to 4% of the total mass of the thermal insulation coating.

4. The electronic heating device of any one of claims 1 to 3, wherein the thickness of the thermal insulation coating is 0.05mm to 0.2mm.

5. The electronic heating device of any one of claims 1 to 4, wherein the power assembly includes a battery, a circuit board and multiple sensors.

6. The electronic heating device of claim 5, wherein the heating tube comprises a tube body and multiple heating elements; and
the tube body is provided with multiple sensing holes adapted to dispose the sensors, and the number of the sensors and the sensing holes is the same.

7. The electronic heating device of claim 5 or 6, wherein all the heating elements are configured to be electrically connected to the battery independently of each other through the circuit board; and
the battery is configured to independently power each heating element through the circuit board.

8. The electronic heating device of claim 6 or 7, wherein the heating elements are embedded or sheathed in the tube wall of the tube body.

9. The electronic heating device of any one of claims 6 to 8, wherein the tube body comprises an open end and a closed end, and all the heating elements are sequentially disposed in the tube body along the direction from the open end to the closed end.

10. The electronic heating device of one of claims 5 to 9, wherein the receiving chamber is divided into a heating chamber and a power supply chamber by the circuit board, wherein the heating assembly is disposed in the heating chamber, and the battery is disposed in the power supply chamber.

11. The electronic heating device of one of claims 1 to 10, wherein the thermal insulation tube is suspended in the receiving chamber.
